# FASCICULE DE BREVET EUROPEEN

(11) **EP 2 445 741 B1**
(45) Date de publication et mention de la délivrance du brevet: **31.05.2017**
(21) Numéro de dépôt: 10745297.1
(22) Date de dépôt: 22.06.2010
(51) Int. Cl.: B60K 6/12, B60W 30/18, F02N 5/00, F02N 7/08, F02N 7/00

(54) **PROCEDE ET DISPOSITIF DE DEMARRAGE DU MOTEUR D'UN VEHICULE**
VERFAHREN UND VORRICHTUNG ZUM STARTEN EINES FAHRZEUGMOTORS
METHOD AND DEVICE FOR STARTING THE ENGINE OF A VEHICLE

(30) Priorité: 25.06.2009 FR 0903098
(43) Date de publication de la demande: 02.05.2012
(73) Titulaire: Envision Vehicle Engineering Novasio Technology Event, 70400 Hericourt (FR)
(72) Inventeur: GAUSSIN, Christophe, CH-1093 La Conversion (CH); HECKY, Stéphane, F-90300 Eloie (FR); ANDRECK, Gilles, F-25400 Audincourt (FR)
(74) Mandataire: Rhein, Alain
(86) Numéro de dépôt international: PCT/FR2010/051272
(87) Numéro de publication internationale: WO 2010/149928

(56) Documents cités:
- WO-A1-2004/091961
- WO-A1-2005/047658
- US-A- 3 384 027
- US-A- 4 959 962
- US-A1- 2001 013 701
- US-A1- 2005 167 178

## Description

La présente invention entre dans le domaine de l'assistance au démarrage du moteur d'un véhicule, en particulier dans les véhicules de transport et de manutention de charge, pouvant avoir des cycles récurrents d'arrêt prolongé, pour des phases de chargement et déchargement, et de déplacement.

L'invention trouvera une application préférentielle mais aucunement limitative dans les véhicules de manutention de containeur au sein d'une installation portuaire. De tels véhicules peuvent être de type grue, pour le chargement et le déchargement de containeur depuis un véhicule terrestre vers une embarcation, et inversement.

Comme évoqué précédemment, l'invention concerne les véhicules pouvant avoir des cycles récurrents d'arrêt prolongé et de déplacement.

De manière connue, lors de leur utilisation, ces véhicules sont soumis à des nombreux cycles de déplacement et d'attente, avec des durées d'arrêt importantes en phases de chargement et déchargement des containeurs.

La plupart de ces véhicules sont équipés pour leur déplacement de moteurs thermiques pourvus d'un démarreur électrique. Cet élément supporte difficilement les démarrages fréquents, de sorte qu'il en résulte une usure prématurée de ses composants, tels les charbons, la couronne dentée ou le pignon d'attaque, mais engendre aussi un échauffement des enroulements ainsi qu'une usure de la batterie en raison des forts appels de courant exigés pour la mise en rotation de la ligne d'arbre.

Par conséquent, il est préférable de ne stopper le moteur qu'en cas d'inactivité totale du véhicule. Ainsi, le moteur reste en fonctionnement, lorsque le véhicule est à l'arrêt, en phase de chargement et de déchargement. Bien que son fonctionnement permanent améliore la longévité des composants susmentionnés, il en résulte un inconvénient majeur lié à la consommation inutile de carburant très coûteuse, nécessitant un approvisionnement régulier. Ce fonctionnement superflu du moteur génère aussi inévitablement des émissions de gaz et donc une pollution atmosphérique plus importante.

De plus, ce type de moteur reste très bruyant, créant une pollution sonore à ses abords.

C'est pourquoi il a été imaginé d'embarquer au sein de tels véhicules, des modules d'aide au démarrage dudit moteur. En somme, ces modules permettent d'accumuler de l'énergie lors du déplacement du véhicule, pour le restituer au moment du redémarrage de ce dernier.

De telles solutions sont décrites au travers des documents US 4 959 962 et US 3 384 027. En particulier, US 4 959 962 décrit un procédé de démarrage comprenant les caractéristiques du préambule de la revendication 1. En particulier, un accumulateur sous forme d'un moteur hydraulique stocke de l'énergie au cours du déplacement du véhicule pour la restituer, directement dans l'entraînement du moteur, au moment de son redémarrage.

De manière plus précise, au moment du démarrage, l'entraînement du moteur, voire des moyens de roulement, est facilité par la restitution de l'énergie hydraulique emmagasinée.

Toutefois, de tels dispositifs ne permettent pas de démarrer le moteur sans intervenir sur le démarreur, à savoir sans que le contact soit demandé par le conducteur. Ainsi, le démarreur électrique subit toujours une usure importante.

L'invention a pour but de pallier les inconvénients de l'état de la technique en proposant un procédé de démarrage du moteur d'un véhicule sans actionnement du démarreur électrique tel que décrit par la revendication 1 et un véhicule tel que décrit dans la revendication 3. Un tel procédé de démarrage consiste à coupler audit moteur des moyens hydrauliques d'accumulation d'énergie ; en cours de fonctionnement dudit moteur, on accumule de l'énergie par compression d'un fluide hydraulique ; puis à l'arrêt du moteur, on restitue l'énergie accumulée pour l'entraînement et le démarrage dudit moteur.

Avantageusement, on accumule l'énergie de mise sous pression dudit fluide en phase de décélération du véhicule.

Plus particulièrement, au moment du démarrage, c'est l'actionnement de l'accélérateur qui contrôle la relance du moteur, sans faire intervenir le démarreur. En somme, l'entraînement forcé du moteur en délivrant l'énergie accumulée, démarre ce dernier, sans que le démarreur ne soit sollicité.

Ainsi, la présente invention permet de stopper le moteur pendant les phases d'arrêt du véhicule et de redémarrer ledit moteur avec une usure moindre de ses composants. Cette solution permet de réduire considérablement la consommation de carburant, ainsi que les émissions polluantes et la pollution sonore environnante, du fait de l'arrêt du moteur lorsque le véhicule ne se déplace pas.

De plus, l'approvisionnement en carburant est plus espacé, augmentant le temps de disponibilité du véhicule.

Pour ce faire, la présente invention concerne un procédé de démarrage du moteur d'un véhicule, dans lequel on couple audit moteur des moyens hydrauliques d'accumulation d'énergie ; en cours de fonctionnement dudit moteur, on accumule de l'énergie par compression d'un fluide hydraulique ; puis à l'arrêt du moteur, on restitue l'énergie accumulée pour l'entraînement et le démarrage dudit moteur ; caractérisé par le fait qu'au moment du démarrage dudit moteur, on commande la restitution de l'énergie accumulée par actionnement de la pédale d'accélération.

L'invention concerne aussi un dispositif de mise en oeuvre du procédé selon l'invention, comprenant des moyens hydrauliques d'accumulation d'énergie par compression d'un fluide hydraulique, lesdits moyens d'accumulation étant pourvus, d'une part, de moyens de connexion destinés à se coupler avec ledit moteur et, d'autre part, de moyens de contrôle de la restitution de l'énergie accumulée, caractérisé par le fait qu'il comprend des moyens de commande de la restitution de l'énergie accumulée sous la forme d'un contrôleur détectant l'actionnement de la pédale d'accélération.

L'invention concerne encore un véhicule, notamment de type portuaire de chargement et de déchargement de containeur, comportant un moteur équipé d'un tel dispositif de démarrage.

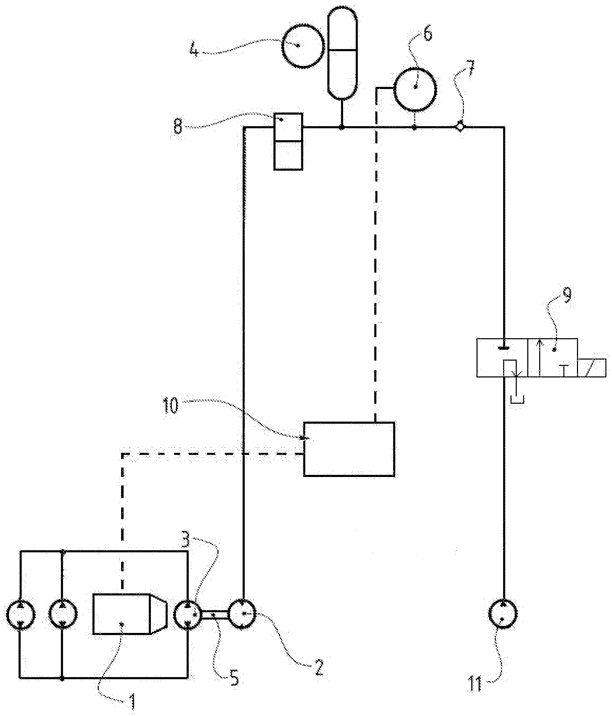

D'autres caractéristiques et avantages de l'invention ressortiront de la description détaillée qui va suivre des modes de réalisation non limitatifs de l'invention, en référence à la figure annexée.

La présente invention concerne le démarrage du moteur 1 d'un véhicule.

Le principe de l'invention consiste à emmagasiner de l'énergie pour ensuite la restituer au moment du démarrage du moteur 1. Pour ce faire, l'invention prévoit d'utiliser une accumulation et un stockage sous pression et hydraulique de cette énergie délivrée au démarrage.

Ainsi, le procédé de démarrage du moteur 1 consiste à coupler audit moteur 1 des moyens hydrauliques d'accumulation d'énergie. De plus, il comprend au moins les étapes suivantes, à savoir en cours de fonctionnement dudit moteur 1, accumuler de l'énergie par compression d'un fluide hydraulique ; puis à l'arrêt du moteur 1, restituer l'énergie accumulée pour l'entraînement et le démarrage dudit moteur 1.

En d'autres termes, le fonctionnement du moteur 1 permet de mettre sous pression un fluide, qui est ensuite gardé en tant que tel, y compris pendant l'arrêt complet du moteur 1, puis au moment de redémarrer le moteur 1, de délivrer la pression ainsi accumulée pour faciliter, forcer ou simplement démarrer le moteur 1.

On notera que l'accumulation d'énergie s'effectue préférentiellement en cours de fonctionnement du moteur 1. Par exemple, au moment de l'arrêt du véhicule, le moteur 1 peut permettre l'accumulation de l'énergie en vue de son redémarrage ultérieur.

Selon un mode alternatif de réalisation, on accumule l'énergie de mise sous pression dudit fluide en phase de décélération du véhicule.

L'invention concerne aussi un dispositif de mise en oeuvre d'un tel procédé de démarrage. Ce dispositif de démarrage comprend donc des moyens hydrauliques d'accumulation d'énergie par compression d'un fluide hydraulique.

De tels moyens d'accumulation peuvent comprendre au moins un accumulateur 4 de pression hydraulique, se présentant sous la forme d'un réservoir sous pression de gaz pouvant contenir un volume variable de fluide, tel de l'eau ou de l'huile dans le cas d'un accumulateur oléohydraulique. Un tel accumulateur 4 permet de fournir un débit important dudit fluide pendant une durée assez courte.

De plus, lesdits moyens d'accumulation sont pourvus de moyens de connexion 5 destinés à se coupler avec ledit moteur 1.

Dès lors, le démarrage du moteur 1 est obtenu par la mise en rotation de ses moyens de transmission, notamment sa ligne d'arbre. Cette mise en rotation peut-être obtenue au travers dudit couplage, par l'intermédiaire des moyens de connexion 5, par exemple au travers d'une liaison mécanique avec le vilebrequin dudit moteur 1.

Dès lors, lors du redémarrage, l'actionnement s'effectue directement sur l'entraînement en sortie du moteur 1, relançant ce dernier en forçant son démarrage, tout en initiant le déplacement du véhicule. Ainsi, le démarreur électrique n'est aucunement sollicité.

Plus précisément, au moment du démarrage dudit moteur 1, on commande la restitution de l'énergie accumulée par actionnement de la pédale d'accélération.

Pour ce faire, ledit dispositif peut intégrer des moyens de commande de la restitution de l'énergie accumulée sous la forme d'un contrôleur, mécanique ou électronique, détectant l'actionnement de la pédale d'accélération.

Dès lors, il n'est aucunement nécessaire d'intervenir sur le démarreur, la simple pression de la pédale d'accélération gérant la restitution et le redémarrage du véhicule.

Selon le mode de réalisation préférentielle, lesdits moyens d'accumulation comprennent aussi des moyens de contrôle 10 de la restitution de l'énergie accumulée. Ces moyens permettent de commander la restitution de l'énergie emmagasinée, mais aussi le remplissage dudit accumulateur 4 et gérer la pression au sein de ce dernier.

Pour ce faire, lesdits moyens de contrôle 10 peuvent comprendre des moyens 6 de mesure de la pression accumulée, tel un capteur de pression vérifiant le niveau de pression du fluide au sein de l'intégralité du dispositif et aussi à l'intérieur de l'accumulateur 4.

Lesdits moyens de contrôle 10 peuvent aussi comprendre un organe d'alimentation 8, tel un distributeur, servant de vanne de contrôle 10 du débit du fluide. En fonction du débit du fluide, il est alors possible de gérer de manière précise le démarrage du moteur 1.

De plus, lesdits moyens de contrôle 10 peuvent aussi comprendre des moyens complémentaires d'approvisionnement en fluide et de maintien sous pression desdits moyens d'accumulation 4. En effet, en cas de détection d'une pression insuffisante pour permettre le démarrage ultérieur du moteur 1, ces moyens d'approvisionnement, commandés par lesdits moyens de contrôle 10, rechargent ledit accumulateur 4 pour atteindre une pression en fluide suffisante.

En particulier, cette pression peut être déterminée de manière variable, notamment par les moyens de contrôle 10, en fonction de différents paramètres liés au moteur 1 et à sa charge, au véhicule, la charge à transporter ou autre.

Combinés aux moyens de contrôle 10, les moyens d'approvisionnement garantissent un bon état de remplissage du stockage du fluide sous pression au sein de l'accumulateur 4, mais aussi son rechargement en cours de fonctionnement.

Selon le mode préférentiel de réalisation, représenté sur la figure, lesdits moyens d'approvisionnement peuvent comprendre un organe d'alimentation 9, notamment de type distributeur hydraulique à clapet. Un générateur de pression 11 permet de refouler le fluide au travers de cet organe d'alimentation 9.

Ils comprennent aussi un clapet anti-retour 7 depuis lesdits moyens d'accumulation. En d'autres termes, ce clapet 7 empêche, notamment sous l'action dudit générateur de pression 11, le retour de fluide depuis l'accumulateur 4 vers lesdits moyens d'approvisionnement, notamment lorsqu'une pression seuil ou déterminée est atteinte au sein de l'accumulateur 4.

On notera que les différents éléments précédemment décrits sont reliés entre eux au travers de circuits hydrauliques adaptés.

Avantageusement, selon le mode préférentiel de réalisation représenté sur la figure, mais aucunement limitatif, un tel moteur peut comprendre un moteur hydraulique 2 couplé à un moteur thermique 3.

Dans ce cas de figure, le démarrage selon l'invention s'effectue directement sur le moteur hydraulique 2 qui retransmet l'énergie délivrée vers le moteur thermique 1. Comme évoqué précédemment, le couplage peut alors s'effectuer de façon traditionnelle au travers d'un moteur flasqué à la pompe de translation, cette dernière étant montée dans l'axe du vilebrequin et entraînée par un accouplement en liaison avec le volant moteur.

Par ailleurs, les composants hydrauliques utilisés sont évidemment prévus étanches, avec un niveau de fuite interne faible de manière à permettre un démarrage après un temps prolongé d'arrêt ou d'inactivité totale du véhicule.

A ce titre, la présente invention concerne aussi un véhicule portuaire de chargement et de déchargement de containeur, notamment de type grue de manutention de containeur, comportant un moteur équipé d'un dispositif de démarrage précédent.

Selon un mode de réalisation préférentiel, déjà évoqué précédemment, un tel véhicule portuaire peut comprendre un moteur thermique 1 pourvu d'un moteur hydraulique 2 couplé avec une pompe hydraulique 3, ledit dispositif de démarrage étant couplé audit moteur hydraulique 2 de manière à restituer l'énergie hydraulique accumulée vers ledit moteur thermique 1, au travers dudit moteur hydraulique 2.

En particulier, ledit couplage peut s'effectuer au travers des moyens de connexion 5 sur le vilebrequin dudit moteur thermique 1 de sorte que la restitution d'énergie actionne en rotation ledit vilebrequin. Ledit actionnement peut alors s'effectuer au travers d'un moteur rotatif, la source d'énergie de ce dernier étant délivrée par les moyens d'accumulation, notamment l'accumulateur 4.

De plus, on constate que le système peut fonctionner en sens inverse, à savoir qu'il permet sous l'action du moteur thermique 1 sur le moteur hydraulique 2, de recharger les moyens d'accumulation et de stocker l'énergie nécessaire au prochain démarrage.

La présente invention offre donc un système de démarrage de moteur de véhicule, en particulier d'un véhicule portuaire, sans apporter de modification au moteur thermique 1 existant. Ce système se veut économique, en raison du coût maîtrisé de ses composants mais aussi par son installation aisée et sa résistance dans le temps.

L'invention permet donc une économie conséquente en carburant mais améliore aussi la longévité du moteur thermique 1, diminuant les réparations et l'entretien y relatif, en particulier le changement du démarreur qui n'est plus sollicité. Il diminue aussi les émissions polluantes et la pollution sonores à ses abords.

L'utilisation masquée pour le conducteur, au travers de l'actionnement de la pédale d'accélération, facilite considérablement les manoeuvres au moment du redémarrage.

## Revendications

1. Procédé de démarrage du moteur d'un véhicule pourvu d'un vilebrequin, dans lequel :
- on couple audit moteur des moyens hydrauliques d'accumulation d'énergie, ledit couplage s'effectuant au travers de moyens de connexion (5) sur le vilebrequin dudit moteur thermique (1) ;
- en cours de fonctionnement dudit moteur, on accumule de l'énergie par compression d'un fluide hydraulique ; puis
- à l'arrêt du moteur, on restitue l'énergie accumulée pour l'entraînement et le démarrage dudit moteur ;
**caractérisé par le fait qu'**au moment du démarrage dudit moteur, on commande la restitution de l'énergie accumulée par actionnement de la pédale d'accélération, actionnant en rotation ledit vilebrequin par l'intermédiaire desdits moyens de connexion (5), relaçant ledit moteur en forçant son démarrage et en initiant le déplacement du véhicule.

2. Procédé de démarrage selon la revendication 1, **caractérisé par le fait qu'**on accumule l'énergie de mise sous pression dudit fluide en phase de décélération du véhicule.

3. Véhicule, notamment de type portuaire de chargement et de déchargement de containeur, comportant un moteur pourvu d'un vilebrequin et comprenant un moteur hydraulique (2) couplé avec un moteur thermique (1), ledit moteur étant encore équipé d'un dispositif de mise en oeuvre du procédé selon l'une quelconque des revendications 1 ou 2, comprenant des moyens (4) hydrauliques d'accumulation d'énergie par compression d'un fluide hydraulique, lesdits moyens d'accumulation (4) étant pourvus, d'une part, de moyens de connexion (5) destinés à se coupler avec ledit moteur et, d'autre part, de moyens de contrôle de la restitution de l'énergie accumulée, **caractérisé par le fait qu'**il comprend des moyens de commande de la restitution de l'énergie accumulée sous la forme d'un contrôleur détectant l'actionnement de la pédale d'accélération, ledit dispositif de démarrage étant couplé audit moteur hydraulique (2) de manière à restituer l'énergie hydraulique accumulée vers ledit moteur thermique (1), au travers dudit moteur hydraulique (2), ledit couplage s'effectuant au travers de moyens de connexion (5) sur le vilebrequin dudit moteur thermique (1) de sorte que la restitution d'énergie actionne en rotation ledit vilebrequin.

## Patentansprüche

1. Verfahren zum Starten des Motors eines Fahrzeugs, der mit einer Kurbelwelle versehen ist, wobei :
- hydraulische Energiespeichermittel an dem Motor gekoppelt werden, wobei die besagte Kopplung über Mittel zum Verbinden (5) mit der Kurbelwelle des besagten Verbrennungsmotors (1) erfolgt ;
- während des Betriebs des besagten Motors Energie durch Kompression der Hydraulikflüssigkeit gespeichert wird ;
- beim Anhalten des Motors gespeicherte Energie zum Antreiben und zum Starten des besagten Motors freigegeben wird;
**dadurch gekennzeichnet, dass** zum Zeitpunkt des Startens des besagten Motors die Freigabe der gespeicherten Energie durch Betätigung des Gaspedals gesteuert wird, was die besagte Kurbelwelle über die besagten Verbindungsmittel (5) in Drehung betätigt, wodurch der besagte Motor aufneu angelasst wird, indem sein Start gezwungen und die Bewegung des Fahrzeugs eingeleitet wird.

2. Verfahren zum Starten nach Anspruch 1, **dadurch gekennzeichnet, dass** die Energie der Druckbeaufschlagung des besagten Fluidums in der Verlangsamungsphase des Fahrzeugs gespeichert wird.

3. Fahrzeug, nämlich der Art Hafenfahrzeug zum Be- und Entladen von Containern, umfassend einen Motor, der mit einer Kurbelwelle versehen ist, und umfassend einen Hydraulikmotor (2), der an einem Verbrennungsmotor (1) gekoppelt ist, wobei der besagte Motor auch eine Vorrichtung zur Durchführung des Verfahrens nach irgendeinem der Ansprüche 1 oder 2 versehen ist, die hydraulische Mittel zum Speichern von Energie (4) durch Kompression einer Hydraulikflüssigkeit umfasst, wobei die besagten Speichermittel (4) einerseits mit Verbindungsmitteln (5), die dazu bestimmt sind, an dem besagten Motor gekoppelt zu werden, und andererseits mit Mitteln zum Steuern der Freigabe der gespeicherten Energie versehen sind, **dadurch gekennzeichnet, dass** es Mittel zum Steuern der Freigabe der gespeicherten Energie umfasst, die als eine Steuerung ausgestaltet ist, die die Betätigung des Gaspedals detektiert, wobei die Starteinrichtung so an dem Hydraulikmotor (2) gekoppelt, dass sie die gespeicherte hydraulische Energie über den besagten Hydraulikmotor (2) zu dem besagten Verbrennungsmotor (1) freigibt, wobei die besagte Kopplung über Mittel zur Verbindung (5) mit der Kurbelwelle des besagten Verbrennungsmotors (1) erfolgt, so dass die Energiefreigabe die besagte Kurbelwelle in Drehung betätigt.

## Claims

1. Method for starting the motor of a vehicle provided with a crankshaft, wherein :
- hydraulic energy-accumulating means are coupled to said motor, said coupling occurring through means for connecting (5) to the crankshaft of said thermal motor (1);
- during the operation of said motor, energy is accumulated by compressing a hydraulic fluid ; then,
- when the motor is stopped, the accumulated energy is delivered for driving and starting said motor ;
**characterised in that** when starting said motor, the delivery of the accumulated energy is controlled through actuating the acceleration pedal, which actuates said crankshaft in rotation through said connecting means (5), re-launching said motor by forcing its start and initiating the movement of the vehicle.

2. Starting method according to claim 1, **characterised in that** the energy for pressurizing said fluid is accumulated during the phase of deceleration of the vehicle.

3. Vehicle, namely container-loading and unloading harbour vehicle, including a motor provided with a crankshaft and comprising a hydraulic motor (2) coupled to a thermal motor (1), said motor being also provided with a device for implementing the method according to any one of claims 1 or 2, comprising hydraulic means (4) for accumulating energy by compressing a hydraulic fluid, said accumulating means (4) being provided, on the one hand, with connecting means (5) aimed at being coupled to said motor and, on the other hand, means for controlling the delivery of the accumulated energy, **characterised in that** it comprises means for controlling the delivery of the accumulated energy in the form of a controller detecting the actuation of the acceleration pedal, said starting device being coupled to said hydraulic motor (2) so as to deliver the accumulated hydraulic energy to said thermal motor (1), through said hydraulic motor (2), said coupling occurring through means for connecting (5) to the crankshaft of said thermal motor (1), so that the delivery of energy actuates said crankshaft in rotation.
